# EUROPEAN PATENT SPECIFICATION

(11) **EP 4 337 594 B1**
(45) Date of publication and mention of the grant of the patent: **22.07.2026**
(21) Application number: 22737998.9
(22) Date of filing: 14.06.2022
(51) Int. Cl.: B67B 3/26

(54) **AUTOMATED SYSTEM FOR CARRYING OUT CAPPING TESTS**
AUTOMATTISIERTES SYSTEM ZUR DURCHFÜHRUNG VON VERSCHLUSSTESTS
SYSTÈME AUTOMATISÉ POUR LA RÉALISATION DE TESTS DE BOUCHAGE

(30) Priority: 15.06.2021 IT 202100015527
(43) Date of publication of application: 20.03.2024
(73) Proprietor: Arol S.p.A., 14053 Canelli AT (IT)
(72) Inventor: FORNO, Marco, 14053 Canelli (AT) (IT)
(74) Representative: Robba, Pierpaolo
(86) International application number: PCT/IB2022/055502
(87) International publication number: WO 2022/264032

(56) References cited:
- WO-A1-2008/050498
- WO-A1-2011/030207
- GB-A- 2 245 373

## Description

### Technical Field

The present invention relates to an automated system for carrying out capping tests.

More particularly, the present invention relates to a system configured for carrying out capping tests by removal torque analysis, in order to determine, on the basis of said characteristics of said sample, one or more parameters optimal for carrying out application of a certain cap (e.g., made of plastics or metal material such as aluminum) to a certain vessel (e.g., a bottle, a flask or the like, made of plastics, glass or metal material such as aluminum).

The present invention further relates to a method for carrying out capping tests by means of the aforesaid system.

### Background Art

It is known from the state of the art to carry out capping tests in which an operator manually picks caps and preforms and place them under a capping head. Capping takes place by using closure parameters set by the operator based on his/her own experience. Downstream of the capping head, the operator carries out quality tests based on re-opening parameters by using appropriate tools, such as a manual or automatic torque meter. The re-opening parameters acquired by the operator during the step of after-closure tests are used by the operator in order to set the closure parameters to be employed in the capping head and the method can be repeated several times until the best conditions obtainable for the cap type used are established.

Therefore, according to prior art, the parameters optimal for applying a certain cap to a certain vessel are determined based on the results of the re-opening test, in an entirely empirical manner.

An example of such systems for carrying out capping tests based on the removal torque of a cap is disclosed in WO 2011/030207.

Such aspects can indeed affect, sometimes also to a significant extent, the accuracy and reliability of the parameters determined based on the results of the test that has been carried out.

Said known systems thus have several series of drawbacks, principally related to the inevitable margins of error deriving from the necessary manual intervention of the operator. A drawback stems from the fact that, in said known systems, an operator manually carries out picking of a cap and corresponding preform to be tested from respective containers, as well as subsequent placing thereof into the capping head, thus starting the capping cycle. At the end of the capping cycle, the operator intervenes again for the manual picking of the tested sample and the subsequent re-opening test for example by means of a torque meter.

First of all, it can be appreciated that, since placing the cap and the preform into appropriate seats of the capping head takes place by manual intervention of the operator, appreciable repeatability in carrying out the placing of said parts to be tested cannot be guaranteed.

Furthermore, considering that said parts to be tested (i.e., a cap and corresponding preform) are necessarily handled by the operator first for the purpose of picking them and then for subsequently placing them, it is noted that they frequently undergo accidental deformation or damage (e.g. ovalization of the cap), with consequent, sometimes significant, prejudice to the accuracy and reliability of the results of the test carried out.

In addition, the need for manual intervention of the operator during the initial step (picking the cap and the preform and placing them) and the final step (picking of the capped sample) of the capping test, makes it difficult to carry out a substantially high number of tests.

On the other hand, there is a significant difficulty in easily, reliably and appreciably keeping track of parameters for samples tested at different times.

A further drawback of prior art stems from the fact that certain physical parameters significant to the outcome of capping, such as material temperature and cross-sectional ovalization, associated with the cap and preform being subjected to the capping test are completely ignored. Variation in even one of the aforementioned physical parameters may result in the need to alter the capping parameters in order to achieve the same result in terms of re-opening parameters. For this reason, despite the fact that the capping test performed according to the described prior art is carried out with the greatest possible skill for human beings, the results are inevitably uncertain and variable and therefore not entirely reliable.

### Summary of Invention

In the light of the considerations made heretofore, the present invention aims at providing an automated system for carrying out capping tests, especially by means of removal torque analysis, that allows defining accurate and reliable parameters for optimally carrying out application of a certain cap to a certain vessel.

To this aim, the present invention provides an automated system for carrying out capping tests according to claim 1.

More particularly, the automated system for carrying out capping tests according to the present invention comprises:
- electronic processor means;
- a first container for containing a plurality of caps, possibly arranged randomly;
- a second container for containing a plurality of preforms, possibly arranged randomly;
- a quality control device for caps and preforms;
- a robotic device, configured for identifying, selecting and picking a cap to be tested from said first container and a preform to be tested from said second container, and for subsequently placing said cap and said preform into corresponding seats of said quality control device;
- a capping control device, arranged downstream of said quality control device and configured for:
   - carrying out at least one cycle of application of said cap to said preform, so as to obtain a sample, and
   - ascertaining one or more characteristics of said sample on the basis of mechanical and/or physical quantities detected during said application cycle,
      and
   - a marking device, configured for affixing, to each tested sample, a marking identifying the characteristics ascertained in respect thereof,
   wherein said electronic processor means are implemented with software means configured for determining, on the basis of said characteristics of said sample, one or more parameters optimal for carrying out application of a cap to a vessel, said cap and said vessel having the same mechanical and physical characteristics as the cap and preform forming said sample, respectively.

The system according to the invention thus makes it possible to satisfactorily overcome the prior art drawbacks described above, principally related to the necessary manual intervention of the operator when carrying out the test (especially in the initial and final steps thereof).

Advantageously, the robotic device may be a robot of the collaborative type (Cobot).

The robotic device may comprise a 3D vision system for the identification and selection of caps and preforms to be picked from said first container and said second container, respectively. Said vision system is further preferably equipped with control means of the type based on neural networks and is capable of allowing the picking of caps and preforms by the robotic device, even when said caps and preforms are arranged randomly within their respective containers.

The robotic device may further comprise, suitably:
- mechanical means for the picking of a cap from said first container and for the subsequent support thereof, and
- mechanical means for the picking of a preform from said second container and for the subsequent support thereof.

The marking device may be an ink-jet marker.

The identifying marking for each sample may comprise a code of the QR type.

The quality control device may be configured for carrying out automatic measurement of one or more mechanical and/or physical quantities relating to caps and preforms to be tested. Typical quantities that are advantageously measured are the temperature of the material of which the cap and the preform are made and the ovalization of the surfaces with respect to the optimal circular cross-section.

Suitably, the system according to the present invention may further comprise an intermediate station for temporary placement of a cap picked from said first container.

Furthermore, the system according to the present invention may further comprise memory storage means comprising a database for storing said characteristics ascertained in respect of each tested sample.

The present invention further provides a method for carrying out capping tests according to claim 9 by means of the system according to one or more of the aspects specified above, said method comprising the following steps of:
- arranging, possibly randomly, a plurality of caps into a first container;
- arranging, possibly randomly, a plurality of preforms into a second container;
- identifying, selecting and picking, in an automatic manner, a cap from said first container and a preform from said second container;
- placing said cap and said preform into corresponding seats of a quality control device;
- carrying out an operation of controlling the quality of said cap and said preform;
- placing said cap and said preform into corresponding seats of a capping control device;
- carrying out at least one cycle of application of said cap to said preform, so as to obtain a sample;
- ascertaining one or more characteristics of said sample on the basis of mechanical and/or physical quantities detected during said application cycle;
- affixing, to said sample, a marking identifying the characteristics ascertained in respect thereof,
- storing said sample, inclusive of its marking, into a collection container for tested samples, and
- determining, on the basis of said characteristics of said sample, one or more parameters optimal for carrying out application of a cap to a vessel, said cap and said vessel having the same mechanical and physical characteristics as the cap and preform forming said sample, respectively.

Advantageously, the invention makes it possible to characterize the capping operation, i.e. the application of a cap to a vessel, by using a robot that carries out automatic picking of parts from a bin or "bin picking".

Furthermore, advantageously, the system according to the invention makes it possible to identify the proper parameters for optimally carrying out application of a specific cap, also in a repetitive mode with intensive rhythm, to a certain vessel.

This result is achieved mainly thanks to the fact that the optimal capping parameters are determined, according to the invention, by means of automated actions by using, preferably, a collaborative robot of the Cobot type for picking caps to be tested in a testing apparatus provided for this purpose.

The system according to the invention, thanks to the introduction of a robot into the working cycle, is completely automated, especially with regard to:
- the selection and picking of caps and preforms;
- the measurement of physical quantities associated with the picked items, which measurement takes place essentially without causing alterations, for example without causing ovalization, temperature variations, and by substantially nullifying the effect of human intervention on the measurement results;
- the repetitive application of the cap and corresponding subsequent removal thereof, based on statistical testing algorithms (torques-speeds-parameters);
- the measurement of physical quantities such as torque, force, speed, position, which take part in the closing cycle of the cap;
- the repetition of the behavior of the cap during application thereof to the vessel, according to which the torque-angle ratio during the step of application to the vessel, is determined by means of the physical quantities described before, by means of a specific motorization emulating the torque load;
- the automatic determination of the parameters optimal for carrying out capping;
- the ability of marking the preforms, for example by means of a printer, reading the codes thereof by means of an appropriate vision system and carrying out measurements also at a later stage.

### Brief Description of Drawings

The features and advantages of the present invention will become more evident from the detailed description of an exemplary embodiment provided here below with reference to the annexed drawings, in which:
Fig. 1 is a schematic front elevational view of an automated system for carrying out capping tests according to an exemplary embodiment of the present invention;
Fig. 2 is a schematic top elevational view of the system of Fig. 1;
Fig. 3 is a schematic, perspective view of the system of Fig. 1, with parts omitted;
Fig. 4 is a schematic, perspective view on an enlarged scale of the detail of a robotic device of the system of Fig. 1;
Fig. 5 is a view similar to the one of Fig. 4, but from a different angle of view;
Fig. 6 is a schematic, perspective view showing the detail of mechanical means of said robotic device, configured for the picking and subsequent support of a cap to be tested, and of mechanical means of said robotic device, configured for the picking and subsequent support of a preform to be tested, respectively;
Fig. 7 is a schematic, perspective view of the robotic device of di Fig. 4, in a working position is which a cap to be tested is placed into an appropriate seat of a quality control device of the system of Fig. 1;
Fig. 8 is a schematic, perspective view on an enlarged scale of the mechanical means of Fig. 6 for the picking and subsequent support of a preform to be tested;
Fig. 9A is a schematic, perspective view on an enlarged scale of the mechanical means of Fig. 6, for the picking and subsequent support of a cap, which mechanical means support a cap after picking of the same;
Fig. 9B is a view similar to the one of Fig. 9A, but in which the cap is omitted, and in which sucker means for the picking and subsequent support of a cap to be tested can be seen;
Fig.10 is a block diagram of the system according to the invention.

### Description of Embodiments

A detailed description of an embodiment of an automated system for carrying out capping tests, according to a preferred exemplary embodiment of the present invention, is provided below.

Said system is referred to as a whole with 1000.

The system 1000 according to the invention is mainly intended for determining parameters optimal for carrying out the application of a certain cap (for example, made of plastics or metal material such as aluminum) to a certain vessel (for example, a bottle or a flask made of plastics or metal material such as aluminum).

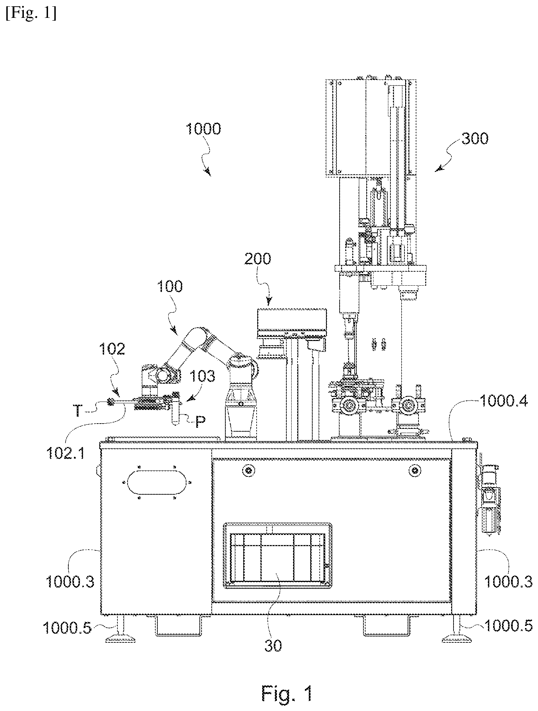

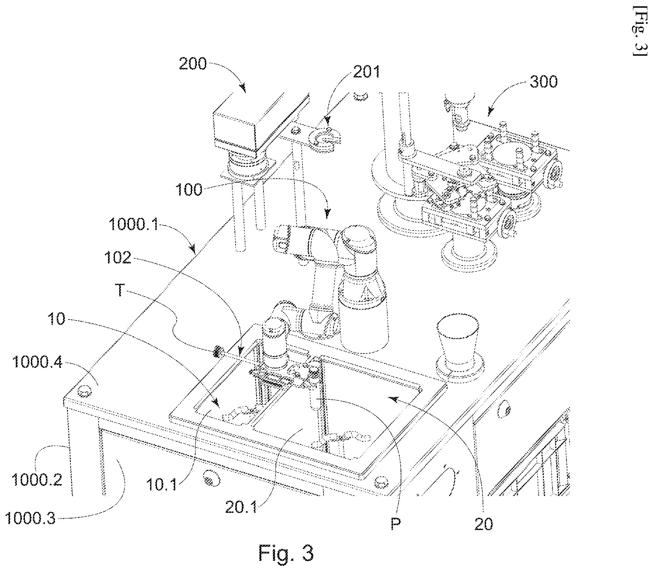

As shown in Figs. 1-3, said system 1000 essentially comprises three main stations, comprising, in order, a robotic device 100 configured for identifying, selecting and picking a cap T to be tested and a preform P to be tested, respectively; a quality control device 200 for caps T and preforms P; and a capping control device 300.

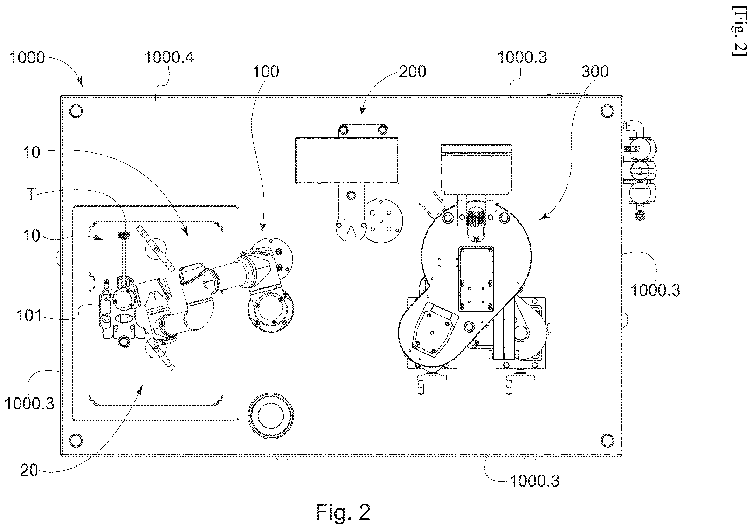

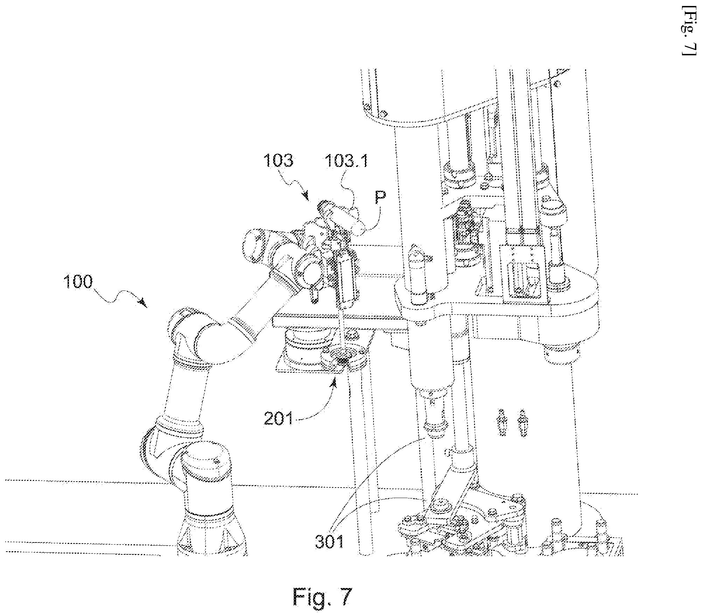

More specifically, the system 1000 according to the present embodiment comprises:
- electronic processor means 500;
- a first container 10 for containing a plurality of randomly arranged caps T (Figs. 2-3);
- a second container 20 for containing a plurality of randomly arranged preforms P (Figs. 2-3);
- the quality control device 200 for caps T and preforms P;
- the robotic device 100, configured for identifying, selecting and picking a cap T to be tested from said first container 10 and a preform P to be tested from said second container 20, and for subsequently placing said cap T and said preform P into corresponding seats 201 of said quality control device 200 (as shown in Fig. 7);
- the capping control device 300, arranged downstream of said quality control device 200 and configured for:
   - carrying out at least one cycle of application of said cap T to said preform P, so as to obtain a sample, and
   - ascertaining one or more characteristics of said sample on the basis of mechanical and/or physical quantities detected during said application cycle,
   and
- a marking device 600, configured for affixing, to each tested sample, a marking identifying the characteristics ascertained in respect thereof,
wherein said electronic processor means 500 are implemented with software means configured for determining, on the basis of said characteristics of said sample, one or more parameters optimal for carrying out application of a cap to a vessel, said cap and said vessel having the same mechanical and physical characteristics as the cap T and preform P forming said sample, respectively.

In the illustrated embodiment, the system 1000 is housed within an integrated structure 1000.1 comprising a support frame 1000.2 and side panels 1000.3. The structure 1000.1 comprises a pair of openings 10.1 and 20.1 arranged side-by-side to each other and coplanar with a horizontal plane 1000.4 of the structure, for allowing access to the container 10 containing the randomly arranged caps T and the container 20 containing the randomly arranged preforms P, respectively.

In addition, according to the illustrated embodiment, the quality control device 200 for caps T and preforms P, the robotic device 100 and the capping control device 300 are associated with the structure 1000.1.

Preferably, the electronic means 500 and the marking device 600 are also associated with the structure 1000.1

Advantageously, in this embodiment, the structure 1000.1 is further provided with adjustable support feet 1000.5 for steady support on the ground.

The cycle of application of the cap T to the preform P can take place, for example, by means of a turret equipped with sensors, driven by a brushless motor and controlled by an appropriate capping algorithm.

In this way, it is possible to carry out the capping test in an entirely automated manner by means of the robotic device 100, without the need for any manual intervention of an operator at any stage during testing.

More particularly, the possibility of carrying out, in an entirely automated manner by means of the robotic device 100, the picking of caps T and preforms P to be tested makes it possible to prevent to a large extent the risk of accidental deformation of said caps T and preforms P to be tested (think, for example, of the accidental ovalization of a cap T, during the corresponding manual picking and/or placing by an operator).

The system 1000 according to the invention further ensures full repeatability of the operations for placing caps T and preforms P, without incurring the inevitable inaccuracies associated with the implementation of manually performed placing operations, as well as the possibility of performing an essentially large number of tests on each tested sample.

As a result, it is possible to obtain accurate and reliable results, based on which parameters optimal for carrying out the application of a cap (e.g., made of plastics or metal material such as aluminum) having the same mechanical and physical characteristics as the tested cap T to a vessel (e.g., a bottle, a flask or the like, made of plastics, glass or metal material such as aluminum) having the same mechanical and physical characteristics as the tested preform P are established.

As stated above, the system 1000 according to the invention is configured for carrying out capping tests by means of removal torque analysis.

In this regard, it has to be noted that such removal torque is affected by a plurality of factors, differently combined with one another, such as the temperature present in the environment in which capping is effected, the materials forming the parts to be coupled, the speed at which the parts are coupled together, as well as the applied tightening torque.

By detecting and monitoring said factors (or possibly a selection of said factors, identified as being predominantly relevant according to the circumstances), as well as by subsequently processing the same by means of an appropriate statistical model, it is possible to define the parameters that are optimal for carrying out the application of a certain cap to a certain vessel, taking into account the unchangeable variables characterizing the capping process.

The quality control device 200 may conveniently be configured for carrying out automatic measurement of one or more mechanical and/or physical quantities relating to caps T and preforms P to be tested.

The capping control device 300 is of a substantially known type and therefore it is not described further for sake of brevity.

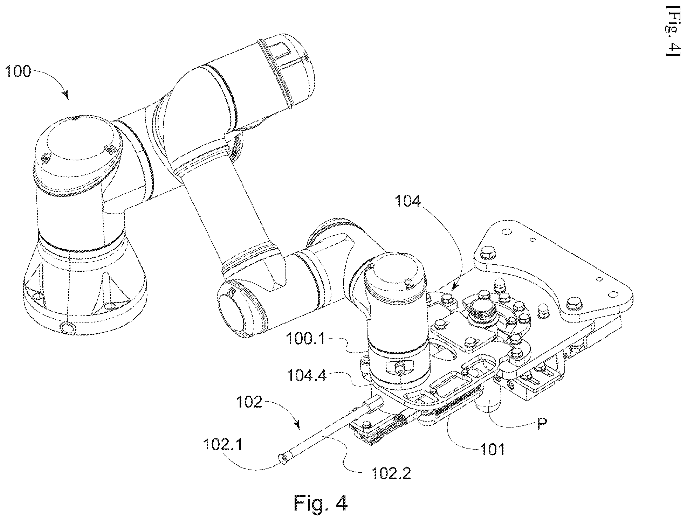

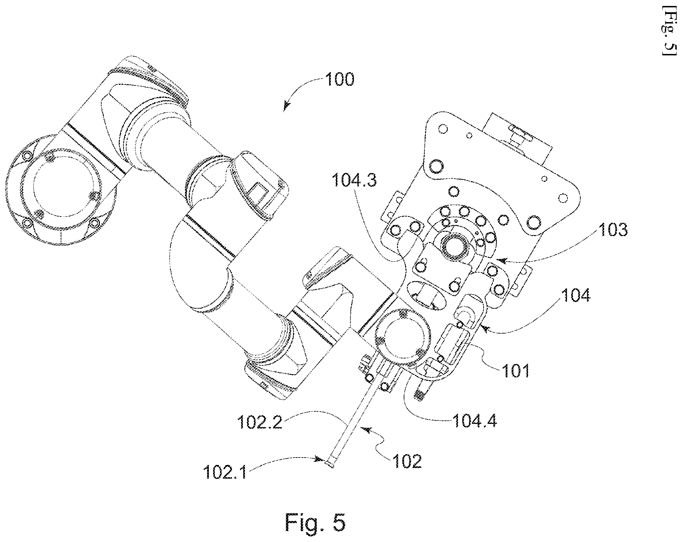

The robotic device 100 of the system 1000 according to the invention is illustrated in detail in Figs. 4-5.

In the present embodiment, conveniently, the robotic device 100 is a robot of the collaborative type (Cobot).

Of course, it is understood that further configurations of the robotic device 100, on condition that they are suitable for the purpose, also fall within the scope of the present invention.

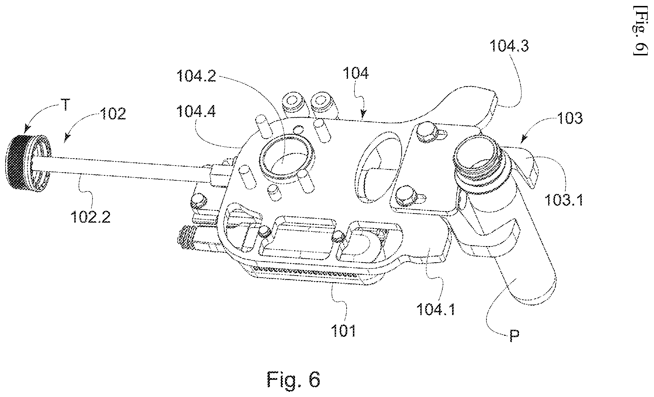

Advantageously, in the illustrated embodiment, the robotic device 100 comprises, preferably associated with the wrist 100.1 of the robotic device 100 (with reference to Figs. 6 and 8-9):
- mechanical means 102 for the picking of a cap T from said first container 10 and for the subsequent support thereof, and
- mechanical means 103 for the picking of a preform P from said second container 20 and for the subsequent support thereof.

Said mechanical means 102, 103 of the robotic device 100 essentially define the so-called "End-Effector" of the robotic device 100 and allow performing the operations of picking, transporting and subsequently placing, in an entirely automated manner, caps T and preforms P to be tested, while at the same time avoiding the risk of accidental deformation (or other form of damage) thereof.

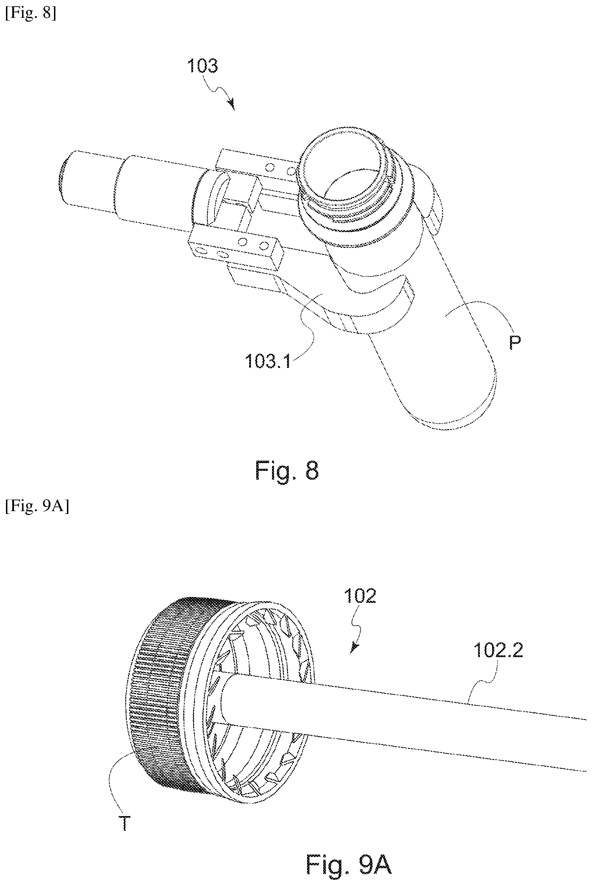

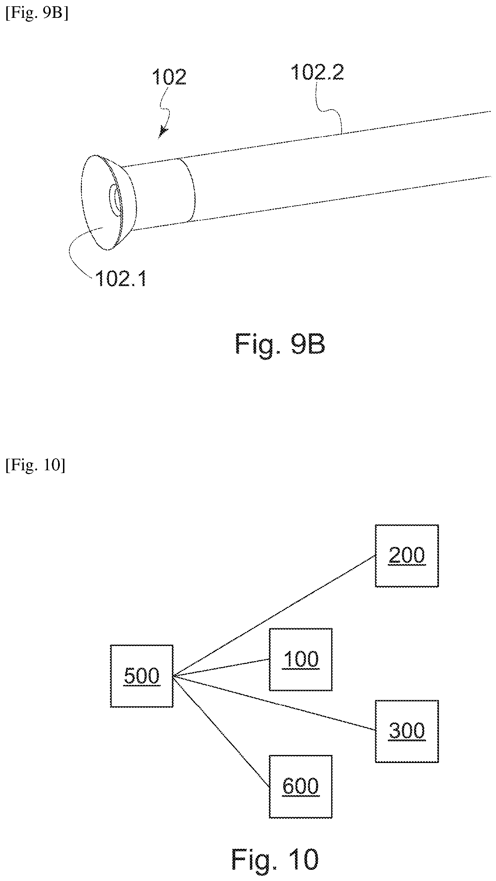

As illustrated in detail in Fig. 8, said mechanical means 103 for the picking and subsequent support of a preform P may advantageously comprise a gripper 103.1 (for example, a hydraulically actuated gripper). Preferably, said gripper 103.1 may further be assisted by gripping means equipped with pneumatic sucker and connected to a vacuum system. On the other hand, as shown in Fig. 9B, said mechanical means 102 for the picking and subsequent support of a cap T may comprise a holding suction cup 102.1 configured in the form of a sucker. Said holding suction cup 102.1 may be made of rubber or other suitable material, preferably slightly deformable in order to adapt to the shape, not always regular, of the surface of the cap T to be picked. In this way, the picking and subsequent support of the cap T (see Fig. 9A) take place by means of sucker and vacuum system. More precisely, in the illustrated embodiment, the holding suction cup 102.1 is mounted at the end of a hollow rod 102.2, for connection to the vacuum system. In addition, the size of the holding suction cup 102.1 is advantageously chosen such as to adapt to the size of the cap T to be picked. In particular, the pad 102.1 may for example have a frustoconical shape with circular base and the diameter of the pad is slightly smaller than that of the seat provided inside the cap. According to this embodiment of the invention, the gripper 103.1 is associated with support means 104 comprising a support plate 104.1 having a seat 104.2 for receiving the wrist 100.1 of the robotic device 100, as can easily be appreciated from the representation of Fig. 4.

In this embodiment, the plate 104.1 has a substantially rectangular shape in which opposite, substantially parallel flanks are defined. The gripper 103.1 is associated with the first flank 104.3 of the plate 104.1, whereas the mechanical means 102 for the picking and support of a cap T are associated with the second flank 104.4, opposite to the first flank 104.3.

The 3D vision system 101 is also associated with the plate 104.1.

Referring especially to Fig. 6, in this particular embodiment, when the cap T and the preform P are held by the gripper 1031 and by the holding suction cup 102.1, respectively, they are oriented with their axes substantially coplanar with and perpendicular to each other, and the 3D vision system 101 is arranged substantially parallel to the plane on which said axes of cap T and preform P lie.

Of course, it is understood that further configurations of said mechanical means 102, 103 for the picking and subsequent support of caps T and preform P, on condition that they are suitable for the purpose, also fall within the scope of the present invention.

The operations of picking caps T and preforms P from their respective containers 10, 20, in which said caps and said preforms may be arranged randomly, can be further facilitated by providing, in said robotic device 100, a 3D vision system 101 (Fig. 2) for identifying and selecting caps T and preforms P to be picked from said first container 10 and said second container, 20, respectively.

The 3D vision system 101 is controlled by means of dedicated software means, possibly based on neural networks, residing in said electronic processor means 500.

Advantageously, said marking device 600 can may be an ink-jet marker of known type.

Of course, it is understood that further configurations of said marking device, on condition that they are suitable for the purpose, also fall within the scope of the present invention.

Said identifying marking of each sample may comprise, by way of example, and therefore without limitation, a code of the QR type.

In this way, the information relating to the characteristics ascertained in respect of each sample can be accessed in a totally easy way, by using an appropriate device of known type for reading QR codes.

Specifically, the reading of said information is effected following re-opening of the sample (i.e., after the cap T has again be separated from the preform P), which re-opening can take place immediately after the test has been carried out, or at a later stage, as appropriate.

The system 100 according to the present invention may further comprise, advantageously, an intermediate station (not shown) for temporary placement of a cap T, picked from said first container 10.

In this way, the cap T can conveniently be placed in said intermediate station by means of a procedure of the "pick and place" type, in order to be subsequently picked from said intermediate station at a later stage, according to an orientation suitable for the respective placement relative to an appropriate seat 201, 301 of said quality control device 200 and said capping control device 300, respectively.

The system 1000 according to the invention may further comprise memory storage means (integrated in said electronic processor means 500 or separate therefrom), comprising a database for storing said characteristics ascertained in respect of each tested sample.

### Method for carrying out capping tests

A detailed description of a method for carrying out capping tests by means of the system 1000, according to a preferred exemplary embodiment of the present invention is provided below.

In particular, said method comprises the following steps of:
- arranging, possibly randomly, a plurality of caps T into a first container 10;
- arranging, possibly randomly, a plurality of preforms P into a second container 20;
- identifying, selecting and picking, in an automatic manner, a cap T from said first container 10 and a preform P from said second container 20;
- placing said cap T and said preform P into corresponding seats 201 of a quality control device 200;
- carrying out an operation of controlling the quality of said cap T and said preform P;
- placing said cap T and said preform P into corresponding seats 301 of a capping control device 300;
- carrying out at least one cycle of application of said cap T to said preform P, so as to obtain a sample;
- ascertaining one or more characteristics of said sample on the basis of mechanical and/or physical quantities detected during said application cycle;
- affixing, to said sample, a marking identifying the characteristics ascertained in respect thereof;
- storing said sample, inclusive of its marking, into a collection container (30) for tested samples, and
- determining, on the basis of said characteristics of said sample, one or more parameters optimal for carrying out application of a cap to a vessel, said cap and said vessel having the same mechanical and physical characteristics as the cap and preform forming said sample, respectively.

### Industrial Applicability

The invention finds advantageous application within the field of bottling, for example in the field of beverages, cosmetics, pharmaceuticals, spirits and nutrition in general.

As can be seen from the foregoing, the present invention also enables the objects set out in the introduction to be achieved in a simple and advantageous manner.

## Claims

1. An automated system (1000) for carrying out capping tests, comprising:
- electronic processor means (500);
- a first container (10) for containing a plurality of randomly arranged caps (T),
- a second container (20) for containing a plurality of randomly arranged preforms (P);
- a quality control device (200) for caps (T) and preforms (P), wherein said quality control device (200) is configured for carrying out automatic measurement of one or more mechanical and/or physical quantities relating to caps (T) and preforms (P) to be tested;
- a robotic device (100), configured for identifying, selecting and picking a cap (T) to be tested from said first container (10) and a preform (P) to be tested from said second container (20), and for subsequently placing said cap (T) and said preform (P) into corresponding seats (201) of said quality control device (200);
- -a capping control device (300), arranged downstream of said quality control device (200), having seats (301) in which said cap (T) and said preform (P) can be placed, and being configured for:
- carrying out at least one cycle of application of said cap (T) to said preform (P), so as to obtain a sample, and
- ascertaining one or more characteristics of said sample on the basis of mechanical and/or physical quantities detected during said application cycle,
and
- a marking device (600), configured for affixing, to each tested sample, a marking identifying the characteristics ascertained in respect thereof,
wherein said electronic processor means (500) are implemented with software means configured for determining, on the basis of said characteristics of said sample, one or more parameters optimal for carrying out application of a cap to a vessel, said cap and said vessel having the same mechanical and physical characteristics as the cap (T) and preform (P) forming said sample, respectively.

2. The system (1000) according to claim 1, wherein said robotic device (100) is a robot of the collaborative type (Cobot).

3. The system (1000) according to claim 1 or 2, wherein said robotic device (100) comprises a 3D vision system (101) for the identification and selection of caps (T) and preforms (P) to be picked from said first container (10) and said second container (20), respectively.

4. The system (1000) according to one or more of the preceding claims, wherein said robotic device (100) further comprises:
- mechanical means (102) for the picking of a cap (T) from said first container (10) and for subsequent support thereof, and
- mechanical means (103) for the picking of a preform (P) from said second container (20) and for subsequent support thereof.

5. The system (1000) according to one or more of the preceding claims, wherein said marking device is an ink-jet marker.

6. The system (1000) according to one or more of the preceding claims, wherein said marking identifying each sample comprises a code of the QR type.

7. The system (1000) according to one or more of the preceding claims, further comprising an intermediate station for temporary placement of a cap (T) picked from said first container (10).

8. The system (1000) according to one or more of the preceding claims, further comprising memory storage means comprising a database for storing said characteristics ascertained in respect of each tested sample.

9. A method for carrying out capping tests by means of the system (1000) according to one or more of claims 1 to 8, comprising the following steps of:
- arranging, randomly, a plurality of caps (T) in a first container (10);
- arranging, randomly, a plurality of preforms (P) in a second container (20);
- identifying, selecting and picking, in an automatic manner, a cap (T) from said first container (10) and a preform (P) from said second container (20);
- placing said cap (T) and said preform (P) into corresponding seats (201) of a quality control device (200) configured for carrying out automatic measurement of one or more mechanical and/or physical quantities relating to caps and preforms to be tested.;
- carrying out in said quality control device (200) an operation of controlling the quality of said cap (T) and said preform (P);
- placing said cap (T) and said preform (P) into corresponding seats (301) of a capping control device (300);
- carrying out in said capping control device (300) at least one cycle of application of said cap (T) to said preform (P), so as to obtain a sample;
- ascertaining one or more characteristics of said sample on the basis of mechanical and/or physical quantities detected during said application cycle;
- affixing, to said sample, a marking identifying the characteristics ascertained in respect thereof,
- storing said sample, inclusive of its marking, into a collection container (30) for tested samples, and
- determining, on the basis of said characteristics of said sample, one or more parameters optimal for carrying out application of a cap to a vessel, said cap and said vessel having the same mechanical and physical characteristics as the cap (T) and preform (P) forming said sample, respectively.

## Patentansprüche

1. Automatisiertes System (1000) zur Durchführung von Verschlusstests, mit:
- elektronischen Prozessormitteln (500),
- einem ersten Behälter (10) zum Aufnehmen von mehreren zufällig angeordneten Verschlüssen (T),
- einem zweiten Behälter (20) zum Aufnehmen von mehreren zufällig angeordneten Vorformlingen (P),
- einer Qualitätssicherungsvorrichtung (200) für Verschlüsse (T) und Vorformlinge (P), wobei die Qualitätssicherungsvorrichtung (200) dafür ausgelegt ist, eine automatische Messung von einer oder mehreren mechanischen und/oder physikalischen Größen in Bezug auf die zu untersuchenden Verschlüsse (T) oder Vorformlinge (P) durchzuführen,
- eine robotische Vorrichtung (100), die dafür ausgelegt ist, einen zu untersuchenden Verschluss (T) aus dem ersten Behälter (10) und einen zu untersuchenden Vorformling (P) aus dem zweiten Behälter (20) zu identifizieren, auszuwählen und herauszunehmen und anschließend diesen Verschluss (T) und diesen Vorformling (P) in entsprechende Plätze (201) der Qualitätssicherungsvorrichtung (200) zu platzieren,
- einer Verschlusssteuervorrichtung (300), die der Qualitätssicherungsvorrichtung (200) nachgelagert ist, Plätze (301) aufweist, in denen der Verschluss (T) und der Vorformling (P) platziert werden können, und dafür ausgelegt ist
∘ wenigstens einen Zyklus des Anbringens des Verschlusses (T) auf dem Vorformling (P) durchzuführen, um eine Probe zu erhalten, und
∘ eine oder mehrere Eigenschaften dieser Probe auf der Basis von mechanischen und/oder physikalischen Größen, die während des Anbringzyklus detektiert wurden, festzustellen und
- einer Markierungsvorrichtung (600), die dafür ausgelegt ist, an jeder getesteten Probe eine Markierung anzubringen, welche die für sie festgestellten Eigenschaften identifiziert,
wobei die elektronischen Prozessormittel (500) mit Softwaremitteln implementiert sind, die dafür ausgelegt sind, auf der Basis der Eigenschaften der Probe einen oder mehrere Parameter zu bestimmen, die für das Durchführen des Anbringens eines Verschlusses auf einem Gefäß optimal sind, wobei der Verschluss und das Gefäß dieselben mechanischen und physikalischen Eigenschaften haben wie der Verschluss (T) und der Vorformling (P), die diese Probe bilden.

2. System (1000) nach Anspruch 1, wobei die robotische Vorrichtung (100) ein Roboter kollaborativen Typs (Cobot) ist.

3. System (1000) nach Anspruch 1 oder 2, wobei die robotische Vorrichtung (100) ein 3D Sichtsystem (100) zum Identifizieren und Auswählen von Verschlüssen (T) und Vorformlingen (P), die aus dem ersten Behälter (10) und dem zweiten Behälter (20) herauszunehmen sind, aufweist.

4. System (1000) nach einem der vorstehenden Ansprüche, wobei die robotische Vorrichtung (100) zudem aufweist:
- mechanische Mittel (102) zum Herausnehmen eines Verschlusses (T) aus dem ersten Behälter (10) und dessen anschließenden Tragens, und
- mechanische Mittel (103) zum Herausnehmen eines Vorformlings (P) aus dem zweiten Behälter (20) und dessen anschließenden Tragens.

5. System (1000) nach einem der vorstehenden Ansprüche, wobei die Markierungsvorrichtung ein Tintenstrahlmarkierer ist.

6. System (1000) nach einem der vorstehenden Ansprüche, wobei die Markierung, die jede Probe identifiziert, einen Code des QR-Typs enthält.

7. System (1000) nach einem der vorstehenden Ansprüche, zusätzlich mit einer Zwischenstation zum vorübergehenden Platzieren eines Verschlusses (T), der aus dem ersten Behälter (10) herausgenommen wurde.

8. System (1000) nach einem der vorstehenden Ansprüche, zusätzlich mit Speichermitteln, die eine Datenbank zum Speichern der in Bezug auf jede untersuchte Probe ermittelten Eigenschaften.

9. Verfahren zum Durchführen von Verschlusstests mittels eines Systems (1000) nach einem der Ansprüche 1 bis 8 mit den folgenden Schritten:
- zufälliges Anordnen von mehreren Verschlüssen (T) in einem ersten Behälter (10),
- zufälliges Anordnen von mehreren Vorformlingen (P) in einem zweiten Behälter (20)
- Identifizieren, Auswählen und Herausnehmen eines Verschlusses (T) aus dem ersten Behälter (10) und eines Vorformlings (P) aus dem zweiten Behälter (20) in automatischer Weise,
- Anordnen des Verschlusses (T) und des Vorformlings (P) in entsprechenden Plätzen (201) einer Qualitätssicherungsvorrichtung (200), die dafür ausgelegt ist, eine automatische Messung von einer oder mehreren mechanischen und/oder physikalischen Größen in Bezug auf die zu untersuchende Verschlüsse und Vorformlinge durchzuführen,
- Durchführen eines Vorgangs des Prüfens der Qualität des Verschlusses (T) und des Vorformlings (P) in der Qualitätssicherungsvorrichtung (200),
- Anordnen des Verschlusses (T) und des Vorformlings (P) in entsprechenden Plätzen (301) einer Verschlusssteuerungsvorrichtung (300),
- in der Verschlusssteuerungsvorrichtung (300) Durchführen von wenigstens einem Zyklus des Anbringens des Verschlusses (T) auf dem Vorformling (P), um eine Probe zu erhalten,
- Ermitteln von einer oder mehrerer Eigenschaften dieser Probe auf der Basis von mechanischen und/oder physikalischen Größen, die während des Anbringzyklus ermittelt wurden,
- Anbringen einer Markierung an der Probe, welche die diesbezüglich ermittelten Eigenschaften identifiziert,
- Lagern der Probe einschließlich ihrer Markierung in einem Sammelbehälter (30) für untersuchte Proben, und
- Ermitteln auf der Basis dieser Eigenschaften der Probe eines oder mehrerer Parameter, die für das Durchführen des Anbringens eines Verschlusses auf einem Gefäß optimal sind, wobei der Verschluss und das Gefäß dieselben mechanischen und physikalischen Eigenschaften wie der Verschluss (T) und der Vorformling (P), welche die Probe bilden, haben.

## Revendications

1. Système automatisé (1000) pour réaliser des essais de capsulage, comprenant :
- des moyens de traitement électronique (500) ;
- un premier conteneur (10) pour contenir une pluralité de capsules (T) disposées de manière aléatoire,
- un deuxième conteneur (20) pour contenir une pluralité de préformes (P) disposées de manière aléatoire ;
- un dispositif de contrôle qualité (200) pour capsules (T) et préformes (P), dans lequel ledit dispositif de contrôle qualité (200) est configuré pour effectuer une mesure automatique d'une ou plusieurs grandeurs mécaniques et/ou physiques relatives aux capsules (T) et préformes (P) à tester ;
- un dispositif robotisé (100), configuré pour identifier, sélectionner et prélever une capsule (T) à tester dans ledit premier conteneur (10) et une préforme (P) à tester dans ledit deuxième conteneur (20), et pour placer ensuite ladite capsule (T) et ladite préforme (P) dans des logements correspondants (201) dudit dispositif de contrôle qualité (200) ;
- un dispositif de contrôle de capsulage (300), disposé en aval dudit dispositif de contrôle qualité (200), présentant des logements (301) dans lesquels ladite capsule (T) et ladite préforme (P) peuvent être placées, et étant configuré pour :
- réaliser au moins un cycle d'application de ladite capsule (T) sur ladite préforme (P), de manière à obtenir un échantillon, et
- déterminer une ou plusieurs caractéristiques dudit échantillon sur la base de grandeurs mécaniques et/ou physiques détectées pendant ledit cycle d'application, et
- un dispositif de marquage (600), configuré pour apposer, sur chaque échantillon testé, un marquage identifiant les caractéristiques déterminées à son égard,
dans lequel lesdits moyens de traitement électronique (500) sont mis en œuvre avec des moyens logiciels configurés pour déterminer, sur la base desdites caractéristiques dudit échantillon, un ou plusieurs paramètres optimaux pour réaliser l'application d'une capsule sur un récipient, ladite capsule et ledit récipient ayant les mêmes caractéristiques mécaniques et physiques que la capsule (T) et la préforme (P) formant ledit échantillon, respectivement.

2. Système (1000) selon la revendication 1, dans lequel ledit dispositif robotisé (100) est un robot de type collaboratif (Cobot).

3. Système (1000) selon la revendication 1 ou 2, dans lequel ledit dispositif robotisé (100) comprend un système de vision 3D (101) pour l'identification et la sélection de capsules (T) et de préformes (P) à prélever dans ledit premier conteneur (10) et ledit deuxième conteneur (20), respectivement.

4. Système (1000) selon l'une quelconque des revendications précédentes, dans lequel ledit dispositif robotisé (100) comprend en outre :
- des moyens mécaniques (102) pour la préhension d'une capsule (T) dans ledit premier conteneur (10) et pour le maintien ultérieur de celle-ci, et
- des moyens mécaniques (103) pour la préhension d'une préforme (P) dans ledit deuxième conteneur (20) et pour le maintien ultérieur de celle-ci.

5. Système (1000) selon l'une quelconque des revendications précédentes, dans lequel ledit dispositif de marquage est un marqueur à jet d'encre.

6. Système (1000) selon l'une quelconque des revendications précédentes, dans lequel ledit marquage identifiant chaque échantillon comprend un code de type QR.

7. Système (1000) selon l'une quelconque des revendications précédentes, comprenant en outre une station intermédiaire pour le placement temporaire d'une capsule (T) prélevée dans ledit premier conteneur (10).

8. Système (1000) selon l'une quelconque des revendications précédentes, comprenant en outre des moyens de stockage en mémoire comprenant une base de données pour stocker lesdites caractéristiques déterminées à l'égard de chaque échantillon testé.

9. Procédé pour réaliser des essais de capsulage au moyen du système (1000) selon l'une quelconque des revendications 1 à 8, comprenant les étapes suivantes :
- disposer, de manière aléatoire, une pluralité de capsules (T) dans un premier conteneur (10) ;
- disposer, de manière aléatoire, une pluralité de préformes (P) dans un deuxième conteneur (20) ;
- identifier, sélectionner et prélever, de manière automatique, une capsule (T) dans ledit premier conteneur (10) et une préforme (P) dans ledit deuxième conteneur (20) ;
- placer ladite capsule (T) et ladite préforme (P) dans des logements correspondants (201) d'un dispositif de contrôle qualité (200) configuré pour effectuer une mesure automatique d'une ou plusieurs grandeurs mécaniques et/ou physiques relatives aux capsules et préformes à tester ;
- effectuer dans ledit dispositif de contrôle qualité (200) une opération de contrôle de la qualité de ladite capsule (T) et de ladite préforme (P) ;
- placer ladite capsule (T) et ladite préforme (P) dans des logements correspondants (301) d'un dispositif de contrôle de capsulage (300) ;
- effectuer dans ledit dispositif de contrôle de capsulage (300) au moins un cycle d'application de ladite capsule (T) sur ladite préforme (P), de manière à obtenir un échantillon ;
- déterminer une ou plusieurs caractéristiques dudit échantillon sur la base de grandeurs mécaniques et/ou physiques détectées pendant ledit cycle d'application ;
- apposer, sur ledit échantillon, un marquage identifiant les caractéristiques déterminées à son égard,
- stocker ledit échantillon, incluant son marquage, dans un conteneur de collecte (30) pour échantillons testés, et
- déterminer, sur la base desdites caractéristiques dudit échantillon, un ou plusieurs paramètres optimaux pour réaliser l'application d'une capsule sur un récipient, ladite capsule et ledit récipient ayant les mêmes caractéristiques mécaniques et physiques que la capsule (T) et la préforme (P) formant ledit échantillon, respectivement.
